# EUROPÄISCHE PATENTSCHRIFT

(11) **EP 3 406 162 B1**
(45) Veröffentlichungstag und Bekanntmachung des Hinweises auf die Patenterteilung: **26.07.2023**
(21) Anmeldenummer: 18173765.1
(22) Anmeldetag: 23.05.2018
(51) Int. Cl.: A47B 9/12

(54) **HÖHENVERSTELLBARES MÖBEL UND KABELSICHERUNG FÜR EIN SOLCHES**
PIECE OF FURNITURE ADJUSTABLE IN HEIGHT AND CABLE GUIDE FOR SAME
MEUBLE RÉGLABLE EN HAUTEUR ET PROTECTION DE CÂBLE POUR UN TEL MEUBLE

(30) Priorität: 24.05.2017 EP 17172607
(43) Veröffentlichungstag der Anmeldung: 28.11.2018
(73) Patentinhaber: Vitra AG, 4127 Birsfelden (CH)
(72) Erfinder: Keller, Stefan, 79585 Steinen - Hofen (DE); Schütt, Helmut, 79379 Mülllheim - Hügelheim (DE)
(74) Vertreter: Latscha Schöllhorn Partner AG

(56) Entgegenhaltungen:
- EP-A1- 1 460 914
- JP-A- H03 131 208
- US-A- 4 969 403
- US-A- 5 041 705

## Beschreibung

### Technisches Gebiet

Die Erfindung betrifft ein höhenverstellbares Möbel gemäss dem Oberbegriff des Anspruchs 1. Solche höhenverstellbaren Tische umfassen typischerweise ein auf dem Boden abstellbares Unterteil, ein Oberteil, eine Stelleinrichtung, einen ersten Referenzabschnitt, einen zweiten Referenzabschnitt und einen Deformationssensor. Ein Abstand zwischen dem Unterteil und dem Oberteil ist mittels der Stellenrichtung veränderbar. Der Deformationssensor ist mit der Stelleinrichtung verbunden, so dass ein Signal des Deformationssensors an die Stelleinrichtung übertragen werden kann. Der Deformationssensor ist zum Detektieren einer Veränderung des ersten Referenzabschnitts und des zweiten Referenzabschnitts zueinander angeordnet. Die Stelleinrichtung stoppt eine Veränderung des Abstands zwischen dem Unterteil und dem Oberteil, wenn das vom Deformationssensor übertragene Signal einer Deformation zwischen dem ersten Referenzabschnitt und dem zweiten Referenzabschnitt entspricht, die einen vordefinierten Schwellenwert überschreitet. Solche Möbel können beispielsweise in Büros in der Form von Schreibtischen als Arbeitsplätze für ein wechselnd stehendes und sitzendes Arbeiten eingesetzt werden.

### Stand der Technik

In Verwendung vieler Möbel und insbesondere Büromöbel wie beispielsweise Schreib- beziehungsweise Arbeitstische ist es notwendig elektrische Geräte im oder auf dem Möbel zu verkabeln. Beispielsweise werden typischerweise Peripheriegeräte von Computern wie Bildschirme, Tastaturen und Computermäuse auf Tischplatten von Schreibtischen angeordnet, wohingegen die Computer selbst unter den Tischplatten aufgestellt sind. Auch die Stromzufuhr erfolgt zumeist entlang des Bodens beziehungsweise von unten her. Die Stromkabel und Kommunikationskabel werden also häufig von unten her auf das Möbel wie beispielsweise auf eine Tischplatte eines Schreibtischs geführt.

Unabhängig von der Verkabelung sind seit längerer Zeit auch höhenverstellbare Möbel wie höhenverstellbare Schreibtische insbesondere als Arbeitsplätze bekannt. Durch die Möglichkeit, eine Arbeitsplatte des Arbeitsplatzes in der Höhe, d.h. in vertikaler Richtung, zu verstellen, kann der Arbeitsplatz einer Körpergrösse einer an ihm arbeitenden Person angepasst werden, was eine wichtige Voraussetzung für eine ergonomische Arbeitshaltung sein kann. Ein spezifischer Tisch, bei dem ein Teil der Tischplatte nach oben ausgefahren werden kann, ist in der US4969403 oder in der JP H03-131208 A gezeigt.

Während früher eine Höhenverstellbarkeit häufig nur in relativ beschränktem Umfang möglich war, um Grössenunterschiede im Bereich der statistisch relativ geringen Standardabweichung der Körpergrösse sitzender erwachsener Personen ausgleichen zu können, sind heutzutage beispielsweise Schreibtische häufig mit erweiterter Höhenverstellbarkeit ausgestattet, welche bei Bedarf ein Arbeiten im Stehen ermöglichen. Da längeres Arbeiten im Stehen aber als unangenehm und/oder ermüdend empfunden werden kann, ist es wichtig, dass eine schnelle und komplikationslose Verstellbarkeit zwischen Höhen der Arbeitsplatte, welche für ein Arbeiten im Stehen geeignet sind und solchen, welche für ein Arbeiten im Sitzen geeignet sind, möglich ist.

Um die Sicherheit bei der Benutzung von insbesondere motorisiert höhenverstellbaren Möbeln gewährleisten zu können, ist es bekannt, diese mit einem Sicherungsmechanismus auszustatten. Bekannte Sicherungsmechanismen umfassen einen Sensor, der eine Deformation beziehungsweise Verschiebung von zwei Bauteilen des Möbels zueinander misst. Der Sensor erfasst eine Veränderung der Bauteile zueinander, die durch einen Widerstand gegen eines der Bauteile verursacht ist. Beispielsweise können solche Sensoren zwischen Rahmen und Tischplatte eines Schreibtischs angeordnet sein. Trifft die Tischplatte während der Höhenverstellung auf einen Widerstand wie beispielsweise ein Körperteil eines Benutzers, so erfasst der Sensor die damit einhergehende Veränderung zwischen Rahmen und Tischplatte. Das automatische Höhenverstellen des Schreibtischs wird dann durch den Sicherungsmechanismus unmittelbar gestoppt.

Bei solchen höhenverstellbaren Möbeln können sich aber aus der eingangs erwähnten Verkabelung von elektrischen Geräten Schwierigkeiten ergeben. Insbesondere kann ein Verstellen des Möbels nach oben dazu führen, dass eine Zugkraft an einem Kabel wirkt und dieses beeinträchtigt. Vor allem bei motorisiert höhenverstellbaren Möbeln beziehungsweise Tischen können dadurch Zugkräfte an den Kabeln wirken, die diese beschädigen oder sogar zerreissen. Zum Beispiel kann in Verwendung eines höhenverstellbaren Schreibtisches ein Kabel beispielsweise durch einen unbeabsichtigt auf ihn gestellten Gegenstand wie eine Standleuchte blockiert werden, während die Tischplatte sich in einer unteren Position befindet. Wird dann die Tischplatte angehoben, so wird das Kabel zwischen dem auf ihm stehenden Gegenstand und dem elektrischen Gerät auf der Tischplatte gespannt, bis es beschädigt wird beziehungsweise reisst oder das elektrische Gerät von der Tischplatte fällt. Dies kann einerseits eine Gefahr für die Benutzer des Tisches darstellen und andererseits können dadurch Dinge wie die elektrischen Geräte beschädigt werden.

Aufgabe der nachfolgenden Erfindung ist es daher, ein höhenverstellbares Möbel beziehungsweise ein Bauteil dazu vorzuschlagen, mit dem die Sicherheit hinsichtlich auf das oder zum Möbel geführter Kabel gewährleistet werden kann.

### Darstellung der Erfindung

Diese Aufgabe wird erfindungsgemäss durch einen höhenverstellbaren Tisch gelöst, wie er durch die Merkmale des unabhängigen Anspruchs 1 definiert ist. Vorteilhafte Ausführungsvarianten der Erfindung ergeben sich aus den abhängigen Ansprüchen.

Das Wesen der Erfindung besteht im Folgenden: Ein höhenverstellbares Möbel umfasst ein auf einem Boden abstellbares Unterteil, ein Oberteil, eine Stelleinrichtung, einen ersten Referenzabschnitt, einen zweiten Referenzabschnitt, einen Deformationssensor und eine Kabelsicherung. Das höhenverstellbare Möbel kann insbesondere ein automatisch beziehungsweise motorisiert höhenverstellbarer Tisch beziehungsweise Schreibtisch sein.

Ein Abstand zwischen dem Unterteil und dem Oberteil ist mittels der Stelleinrichtung insbesondere automatisch beziehungsweise motorisiert veränderbar. Damit kann bei auf dem Boden aufgestellten Unterteil das Oberteil höhenverstellt werden. Zum Aufstellen auf den Boden kann das Unterteil mit einer ausreichenden Anzahl Füssen ausgestattet sein.

Der Deformationssensor ist zum Detektieren einer Änderung des ersten Referenzabschnitts und des zweiten Referenzabschnitts zueinander angeordnet beziehungsweise ausgebildet. Er ist zudem mit der Stelleinrichtung verbunden, so dass ein Signal des Deformationssensors an die Stelleinrichtung übertragbar ist. Die Verbindung kann über ein Datenkabel oder auch kabellos realisiert sein. Der Begriff "Änderung des ersten Referenzabschnitts und des zweiten Referenzabschnitts zueinander" bezieht sich in diesem Zusammenhang auf eine körperliche relative Änderung der beiden Referenzabschnitte. Diese kann durch eine Deformation oder eine Umpositionierung beziehungsweise Lageänderung zumindest eines der beiden Referenzabschnitte beziehungsweise der Bauteile, an denen die Referenzabschnitte ausgebildet sind, verursacht werden.

Die Stelleinrichtung ist dazu eingerichtet, eine Veränderung des Abstands zwischen dem Unterteil und dem Oberteil zu stoppen, wenn das vom Deformationssensor übertragene Signal einer Änderung des ersten Referenzabschnitts und des zweiten Referenzabschnitts zueinander entspricht, die einen vordefinierten Schwellenwert überschreitet. Der Schwellenwert kann im Deformationssensor beziehungsweise der Stelleinrichtung voreingestellt sein. Er kann auch konfigurierbar beziehungsweise durch einen Benutzer anpassbar sein. Zusammen mit dem Deformationssensor stellt die Stelleinrichtung einen Sicherungsmechanismus bereit, mit dem die Sicherheit im Betrieb des höhenverstellbaren Möbels verbessert beziehungsweise gewährleistet werden kann.

An der Kabelsicherung ist ein Kabel zum Verkabeln eines elektrischen Geräts montierbar. Die Kabelsicherung ist so an den ersten Referenzabschnitt und den zweiten Referenzabschnitt gekoppelt, dass eine Zugkraft, die am an der Kabelsicherung montierten Kabel wirkt, eine Änderung des ersten Referenzabschnitts und des zweiten Referenzabschnitts zueinander bewirkt. Der Begriff "koppeln" kann sich in diesem Zusammenhang eine beliebige direkte oder indirekte Verbindung mit den Referenzabschnitten beziehen, die ein Einwirken auf diese ermöglicht.

Die vom Deformationssensor detektier- beziehungsweise erfassbare Änderung des ersten Referenzabschnitts und des zweiten Referenzabschnitts zueinander kann eine relative Deformation zwischen dem ersten Referenzabschnitt und dem zweiten Referenzabschnitt umfassen. Alternativ oder zusätzlich kann sie eine Änderung des Abstands zwischen dem ersten Referenzabschnitt und dem zweiten Referenzabschnitt umfassen. Auch kann sie eine beliebige andere relative Positions- oder Ausrichtungsänderung der Referenzabschnitt umfassen.

Die Kabelsicherung ermöglicht es erfindungsgemäss, den Deformationssensor beziehungsweise den mit ihm realisierten Sicherungsmechanismus zu nutzen, um auch das Kabel zu sichern. Insbesondere kann dabei der Stoppmechanismus, der zur Sicherung einer motorischen Höhenverstellung vorgesehen sein kann, genutzt werden, um auch das Kabel vor einer Beschädigung zu sichern. Auf diese Weise kann die Sicherheit des höhenverstellbaren Möbels hinsichtlich der von Beschädigungen des Kabels ausgehenden Gefahren gewährleistet werden.

Vorzugsweise ist die Kabelsicherung so ausgestaltet ist, dass eine Zugkraft am Kabel von maximal etwa 300 Newton (N), von maximal etwa 200 N oder von maximal etwa 100 N eine den Schwellenwert übersteigende Änderung des ersten Referenzabschnitts und des zweiten Referenzabschnitts zueinander bewirkt. Üblicherweise müssen stromführende Kabel reglementarische Auflagen an eine minimale Reissfestigkeit, wie sie beispielsweise in entsprechenden Normen definiert sind, erfüllen. Damit soll insbesondere verhindert werden, dass stromführende Kabel zu schnell reissen oder auf andere Weise beschädigt werden und so Personen gefährden. Indem die Kabelsicherung konfiguriert ist, dass der Sicherungsmechanismus des höhenverstellbaren Möbels anspringt, wenn die Zugkraft am Kabel 100 N, 200 N oder 300 N beträgt oder diese Werte jeweils übersteigt, kann eine Beschädigung von weiterverbreitet zugelassenen Kabeln verhindert werden. In bekannten Messverfahren zum Prüfen, ob eine Norm eingehalten ist, wird die Zugkraft kontinuierlich erhöht, bis eine Erhöhung der Tischplatte gestoppt wird. Mit der vorstehend beschriebenen bevorzugten Ausführungsform der Erfindung kann also gewährleistet werden, dass bei einer Erhöhung der Zugkraft spätestens bei den Normwerten 100 N, 200 N oder 300 N der Sicherheitsmechanismus anspringt. Dadurch kann sichergestellt werden, dass genormte Kabel nicht beschädigt werden beziehungsweise gesichert sind.

Um eine zweckmässige Sensibilität bereitstellen zu können, umfasst der Deformationssensor vorzugsweise ein Piezoelement beziehungsweise einen Piezofühler. Der Begriff "Piezoelement" bezieht sich in diesem Zusammenhang auf ein ein Bauteil, das einen Piezoeffekt ausnutzt, um bei Einwirkung einer mechanischen Kraft eine elektrische Spannung zu erzeugen. Dabei kann der Piezoeffekt ein piezoresisitiver Effekt sein, der die Veränderung des elektrischen Widerstands eines Materials durch Druck oder Zug beschreibt.

Alternativ oder zusätzlich zum Piezoelement kann der Deformationssensor auch mit anderen Messmitteln ausgestattet sein. Beispielsweise kann er optische oder akustische Messmittel oder ähnliches umfassen.

Bevorzugt weist das Oberteil einen Tragrahmen und eine vom Tragrahmen gehaltene Tischplatte auf, wobei die Kabelsicherung an der Tischplatte oder am Tragrahmen montiert ist und der Tragrahmen den ersten Referenzabschnitt und die Tischplatte den zweiten Referenzabschnitt umfassen. Dies kann eine effiziente und ausreichend präzise Ausbildung der Kabelsicherung ermöglichen.

Vorzugsweise umfasst die Kabelsicherung einen Umlenkhebel, der um eine Drehachse kippbar mit dem ersten Referenzabschnitt oder dem zweiten Referenzabschnitt verbunden ist. Dabei ist die Kabelsicherung vorzugsweise dazu ausgestaltet, dass ein Kippen des Umlenkhebels um die Drehachse eine Kraft auf denjenigen des ersten Referenzabschnitts und des zweiten Referenzabschnitts, mit dem der Umlenkhebel nicht drehbar verbunden ist, überträgt. Ein solcher Umlenkhebel ermöglicht es, auf effiziente Weise eine Änderung des ersten Referenzabschnitts und des zweiten Referenzabschnitts zueinander zu verursachen, wenn eine Zugkraft am Kabel wirkt. Der Umlenkhebel übersetzt also quasi die Zugkraft in eine vom Sicherungsmechanismus erfassbare Grösse beziehungsweise Bewegung.

Das Kabel ist vorzugsweise am Umlenkhebel der Kabelsicherung montierbar. So kann die Zugkraft direkt auf den Umlenkhebel übertragen und von diesem an die Referenzabschnitte übergeben werden. Dabei ist der Umlenkhebel vorzugsweise mit einer Kabelbefestigungseinrichtung ausgestattet. Eine solche Kabelbefestigungseinrichtung kann eine effiziente und reversible Montage des Kabels am Umlenkhebel ermöglichen. Die Kabelbefestigungseinrichtung kann beispielsweise eine Klemmstruktur aufweisen, mittels welcher das Kabel am Umlenkhebel festgeklemmt werden kann.

Vorzugsweise löst die Stelleinrichtung vor dem Stoppen der Veränderung des Abstands zwischen dem Unterteil und dem Oberteil eine gegenläufige Veränderung des des Abstands zwischen dem Unterteil und dem Oberteil aus, wenn das vom Deformationssensor übertragene Signal einer Änderung des ersten Referenzabschnitts und des zweiten Referenzabschnitts zueinander entspricht, die den vordefinierten Schwellenwert überschreitet. Auf diese Weise kann zusätzlich zum Stoppen der Erhöhung der Zugkraft am Kabel diese Zugkraft reduziert werden. Dies kann die Sicherheit des Systems weiter verbessern.

Ein anderer Aspekt der vorliegenden Offenbarung betrifft eine Kabelsicherung, die für ein wie oben beschriebenes höhenverstellbares Möbel konfiguriert ist. Die Kabelsicherung ist dazu ausgestaltet beziehungsweise so ausgebildet, dass an ihr ein Kabel montierbar ist. Sie ist weiter dazu ausgestaltet beziehungsweise so ausgebildet, dass sie so an einen ersten Referenzabschnitt des höhenverstellbaren Möbels und einen zweiten Referenzabschnitt des höhenverstellbaren Möbels koppelbar ist, dass eine am an der Kabelsicherung montierten Kabel wirkende Zugkraft eine Änderung des ersten Referenzabschnitts und des zweiten Referenzabschnitts zueinander bewirkt.

Eine solche Kabelsicherung ermöglicht eine effiziente Implementierung der oben im Zusammenhang mit dem erfindungsgemässen höhenverstellbaren Möbels beschriebenen Effekte und Vorteile. Zudem kann mit der Kabelsicherung ein bestehendes mit einem Deformationssensor ausgestattetes höhenverstellbares Möbel effizient nachgerüstet werden.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden das erfindungsgemässe höhenverstellbare Möbel unter Bezugnahme auf die beigefügten Zeichnungen anhand von Ausführungsbeispielen detaillierter beschrieben. Es zeigen:
- Fig. 1: eine perspektivische Ansicht von oben auf einen Schreibtisch als ein Ausführungsbeispiel eines erfindungsgemässen höhenverstellbaren Tischs;
- Fig. 2: eine perspektivische Ansicht von unten an den Schreibtisch von Fig. 1;
- Fig. 3: eine teilweise geschnittene Frontansicht des Schreibtischs von Fig. 1;
- Fig. 4: eine Ansicht eines Deformationssensors des Schreibtischs von Fig. 1 im Details F von Fig. 3;
- Fig. 5: eine Ansicht einer Kabelsicherung des Schreibtischs von Fig. 1 im Details E von Fig. 3 in einer ungekippten Stellung; und
- Fig. 6: eine Ansicht der Kabelsicherung des Schreibtischs von Fig. 1 im Details E von Fig. 3 in einer gekippten Stellung.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

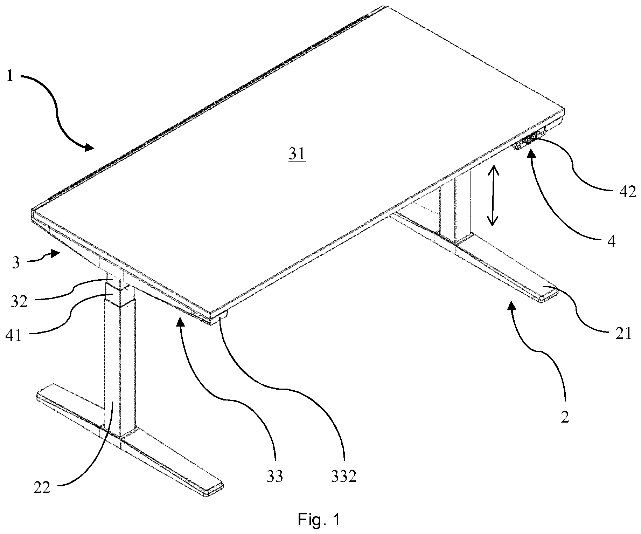

Fig. 1 zeigt einen Schreibtisch 1 als ein Ausführungsbeispiel eines höhenverstellbaren Tischs. Der Schreibtisch 1 umfasst ein Unterteil 2, ein Oberteil 3 und eine Stelleinrichtung 4 zur automatischen Einstellung eines Abstands zwischen dem Unterteil 2 und dem Oberteil 3. Das Unterteil 2 umfasst zwei auf einen Boden aufgestellte Füsse 21 und zwei sich jeweils von einem der Füsse 21 vertikal nach oben erstreckenden Basissäule 22. Die Füsse 21 sind jeweils als ein horizontaler Balken ausgebildet und die Basissäulen 22 jeweils als ein Vierkantrohr.

Das Oberteil 3 weist eine rechteckige Tischplatte 31, zwei Verbindungssäulen 32 und einen Tragrahmen 33 mit zwei T-Streben 332 auf. Die T-Streben 332 des Tragrahmens 33 sind jeweils entlang einer der kürzeren Seiten der Tischplatte 31 angeordnet und mit dieser fest verbunden. Sie tragen die Tischplatte 31. Mittig erstrecken sich die Verbindungssäulen 32 von jeweils einer der T-Streben 332 vertikal nach unten. Die Verbindungssäulen 32 sind als Zylinder mit einem quadratischen Querschnitt ausgebildet, der etwas kleiner ist als der quadratische Querschnitt der Basissäule 22.

Die Stelleinrichtung 4 umfasst zwei Teleskopsäulen 41 und eine Bedieneinheit 42. Die Teleskopsäulen 41 sind jeweils als Vierkantrohre ausgebildet. Sie erstrecken sich vertikal, wobei sie nach unten in jeweils eine der Basissäulen 22 des Unterteils 2 eingeführt sind und von oben her jeweils eine der Verbindungssäulen 32 aufnehmen. Die Basissäulen 22, die Teleskopsäulen 41 und die Verbindungssäulen 32 bilden zusammen jeweils ein Teleskop, das über eine Antriebsmechanik verstellt werden kann. Insbesondere können die Säulen aus- und ineinander gefahren werden, sodass das Teleskop jeweils entsprechend verlängert beziehungsweise verkürzt werden kann. Damit kann der Abstand zwischen Oberteil 3 und Unterteil 2 und somit die Höhe der Tischplatte 31 eingestellt werden. Die Bedieneinheit 42 ermöglicht es einem Benutzer des Schreibtischs 1 dessen Höhe einzustellen beziehungsweise die Tischplatte 31 hoch und runter zu bewegen.

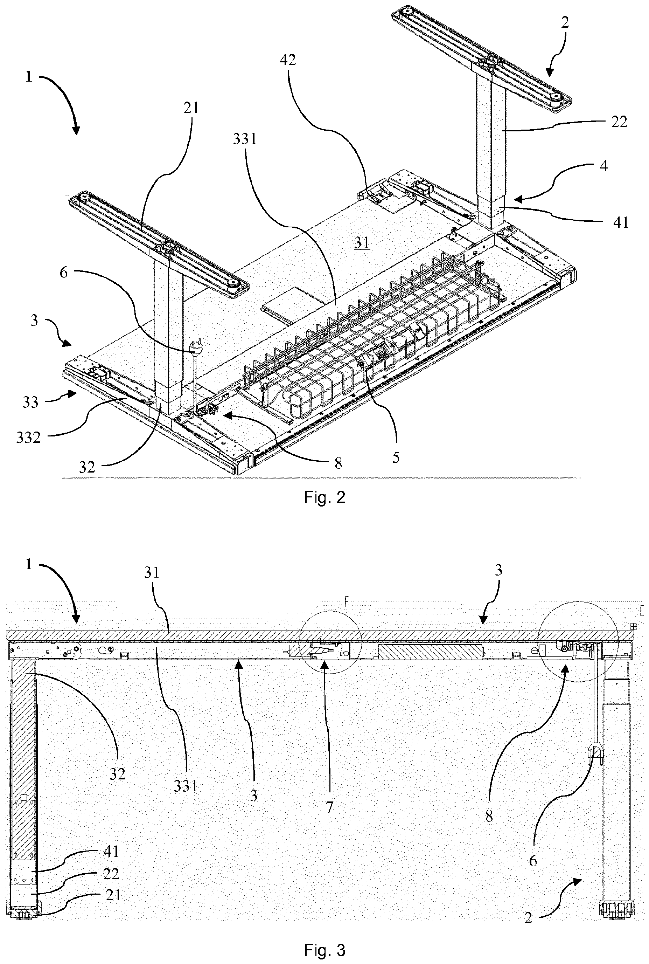

In Fig. 2 ist der Schreibtisch 1 im Vergleich zur Fig. 1 um 180° gedreht, sodass das Unterteil 2 oben und das Oberteil 3 unten liegt. Dabei ist ersichtlich, dass der Tragrahmen 33 des Oberteils 3 eine Querstrebe 331 aufweist, welche die beiden T-Streben 332 jeweils in einem rechten Winkel zur Querstrebe 331 miteinander verbindet. An der Unterseite der Tischplatte 31 ist ein Korb 5 montiert, in dem verschiedene Dinge wie beispielsweise eine Stromsteckleiste geordnet nahe der Tischplatte 31 positioniert werden können. An der Querstrebe 331 des Tragrahmens 33 ist ein Ausführungsbeispiel einer Kabelsicherung 8 montiert. Ein Kabel 6 ist über die Kabelsicherung 8 mit dem Schreibtisch 1 verbunden. Das Kabel 8 kann insbesondere zur Stromversorgung von auf der Tischplatte 31 platzierten Objekten verwendet werden.

Wie in Fig. 3 dargestellt sind in der Querstrebe 331 des Tragrahmens 33 ein Deformationssensor 7 und ein Motor 43 der Stelleinrichtung 4 angeordnet. Der Motor 43 ist mit der Teleskopmechanik verbunden und treibt diese zur Verstellung der Höhe der Tischplatte 31 an. Die Säulen der Teleskope sind so geformt, dass die Teleskopsäule 41 der Stelleinrichtung 4 stabil geführt jeweils in der zugehörigen Basissäule 22 des Unterteils 2 vertikal bewegbar ist. Die Teleskopsäule 41 und die Basissäule 22 sind als hohle Vierkantrohre ausgeführt. Die Verbindungssäulen 32 des Tragrahmens 3 sind solide ausgeführt und so geformt, dass sie ebenfalls stabil geführt jeweils in der zugehörigen Teleskopsäule 41 vertikal bewegbar sind.

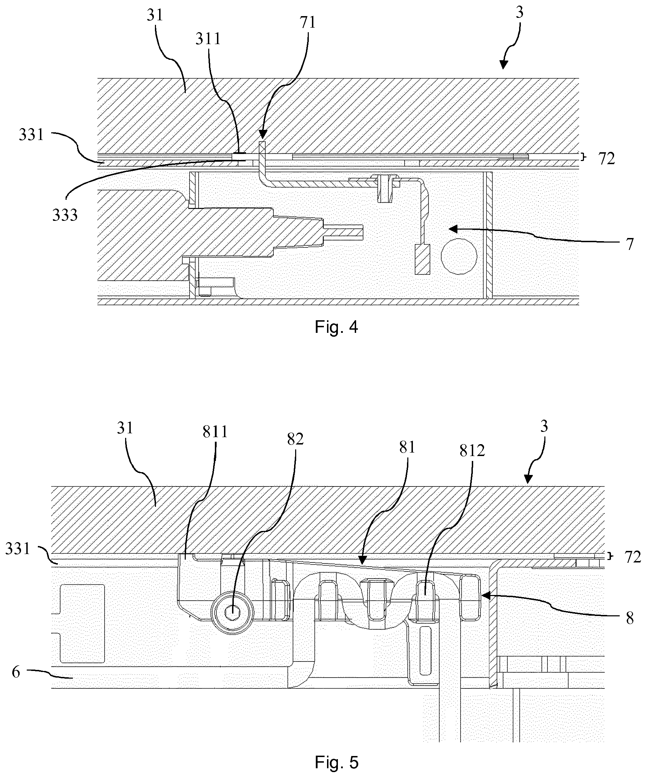

In Fig. 4 ist der Aufbau des Deformationssensors 7 im Detail gezeigt. Der Deformationssensor 7 ist in der Querstrebe 331 des Tragrahmens 33 montiert und umfasst ein Piezoelement 71 beziehungsweise einen Piezofühler. Die Unterseite der Tischplatte 31 bildet einen erster Referenzabschnitt 311 und die Oberseite der Querstrebe 331 einen zweiten Referenzabschnitt 333. Über das Piezolement 71 detektiert der Deformationssensor 7 eine Änderung eines Referenzabstands 72 zwischen der Tischplatte 31 und dem Tragrahmen 33 beziehungsweise seiner Querstrebe 311. Der Deformationssensor 7 ist mit der Stelleinheit 4 verbunden, sodass Signale vom Deformationssensor 7 zur Stelleinheit übertragen werden können. Wenn die Änderung des Referenzabstands 72 während einer Veränderung der Höhe der Tischplatte 31 einen vordefinierten Schwellenwert übersteigt, so stoppt die Stelleinrichtung die Veränderung der Höhe und fährt die Tischplatte 31 ein kleines Stück in die Gegenrichtung zurück.

Der Deformationssensor 7 kann für einen sicheren und störungsfreien Betrieb des höhenverstellbaren Schreibtischs 1 vorgesehen sein. Beispielsweise kann beim Herunterfahren der Tischplatte 31 ein Gegenstand oder eine Person im Weg sein. Trifft die Tischplatte 31 auf den Gegenstand beziehungsweise die Person, so wird sie bezüglich des Tragrahmens 33 zumindest leicht deformiert, was eine Änderung des Referenzabstands 72 zur Folge hat. Mittels des Piezoelements 71 kann der Deformationssensor 7 vergleichsweise feine solche Änderungen erfassen.

Fig. 5 zeigt Einzelheiten der Kabelsicherung 8, die einen Umlenkhebel 81 und eine Drehachse 82 umfasst. Der Umlenkhebel 81 ist über die Drehachse 82 kippbar an der Querstrebe 331 befestigt. Er weist im Bereich seines einen Längsendes, in der Fig. 5 ist es das linke Längsende, einen nach oben zur Tischplatte 31 ausgerichtete Stossnase 811 auf. Ab etwa der Mitte des Umlenkhebels 81 erstreckt sich eine Kabelbefestigungseinrichtung 812 entlang des Umlenkhebels 81. Das Kabel 6 ist über die Kabelebefestigungseinrichtung 812 mit dem Umlenkhebel 81 verbunden. Insbesondere umfasst die Kabelbefestigungseinrichtung 812 drei Klemmabschnitte, in die das Kabel 6 schlängelnd beziehungsweise S-förmig eingeklemmt ist. Im Bereich des rechten Längsendes des Umlenkhebels 81 erstreckt sich das Kabel 6 vertikal nach unten in Richtung Boden.

Die Drehachse 82 ist aussermittig mit dem Umlenkhebel 81 verbunden, sodass der Teil mit der Stossnase 811 links der Drehachse 82 kürzer ist als der Teil mit der Kabelbefestigungseinrichtung 812 rechts der Drehachse 82. Die Stossnase 811 liegt an der Unterseite der Tischplatte 31 an. In der Position von Fig. 5 ist der Umlenkhebel 81 in einer normalen Ausgangsposition, das heisst ungekippt beziehungsweise horizontal ausgerichtet.

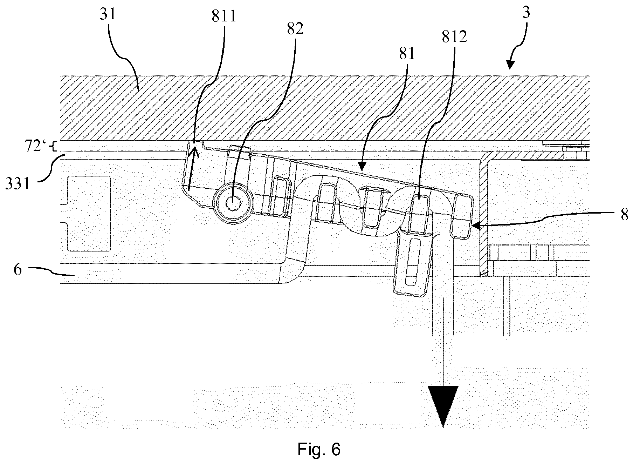

In Fig. 6 wirkt eine Zugkraft am Kabel 6 nach unten. Beispielsweise kann dies geschehen, wenn das Kabel 6 während des Hochfahrens der Tischplatte 31 am Boden blockiert ist. Die Zugkraft wird über die Kabelbefestigungseinrichtung 812 an den Umlenkhebel 81 übertragen, sodass dieser im Uhrzeigersinn um die Drehachse 82 gekippt wird. Dadurch wird die Tischplatte 31 und/oder die Querstrebe 33 gebogen und der Referenzabstand 72' zwischen den beiden wird vergrössert. Damit zusammen einher geht auch eine Veränderung des Abstands zwischen dem ersten Referenzabschnitt 311 und dem zweiten Referenzabschnitt 333. Der Deformationssensor 7 erfasst diese Änderung und der Sicherheitsmechanismus, wie er oben im Zusammenhang mit der Fig. 4 beschrieben ist, wird aktiviert. Dabei wird insbesondere das Erhöhen der Tischplatte 31 gestoppt. Auf diese Weise kann verhindert werden, dass die Zugkraft weiter zunimmt und das Kabel 6 beschädigt wird.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Höhenverstellbares Möbel (1) mit einem auf einem Boden abstellbaren Unterteil (2), einem Oberteil (3), einer Stelleinrichtung (4), einem ersten Referenzabschnitt (311), einem zweiten Referenzabschnitt (333) und einem Deformationssensor (7), wobei
ein Abstand zwischen dem Unterteil (2) und dem Oberteil (3) mittels der Stelleinrichtung (4) veränderbar ist,
der Deformationssensor (7) zum Detektieren einer Änderung des ersten Referenzabschnitts (311) und des zweiten Referenzabschnitts (333) zueinander angeordnet ist,
der Deformationssensor (7) mit der Stelleinrichtung (4) verbunden ist, so dass ein Signal des Deformationssensors (7) an die Stelleinrichtung (4) übertragbar ist, und
die Stelleinrichtung (4) dazu eingerichtet ist, eine Veränderung des Abstands zwischen dem Unterteil (2) und dem Oberteil (3) zu stoppen, wenn das vom Deformationssensor (7) übertragene Signal einer Änderung des ersten Referenzabschnitts (311) und des zweiten Referenzabschnitts (333) zueinander entspricht, die einen vordefinierten Schwellenwert überschreitet,
**gekennzeichnet durch**
eine Kabelsicherung (8), an der ein Kabel (6) zum Verkabeln eines elektrischen Geräts montierbar ist und die so an den ersten Referenzabschnitt (311) und den zweiten Referenzabschnitt (333) gekoppelt ist, dass eine Zugkraft, die am an der Kabelsicherung (8) montierten Kabel (6) wirkt, eine Änderung des ersten Referenzabschnitts (311) und des zweiten Referenzabschnitts (333) zueinander bewirkt.

2. Höhenverstellbares Möbel (1) nach Anspruch 1, bei dem der Deformationssensor (7) ein Piezoelement (71) umfasst.

3. Höhenverstellbares Möbel (1) nach Anspruch 1 oder 2, bei dem das Oberteil (3) einen Tragrahmen (32) und eine vom Tragrahmen (32) gehaltene Tischplatte (31) aufweist, wobei die Kabelsicherung (8) an der Tischplatte (31) oder am Tragrahmen (32) montiert ist und die Tischplatte (31) den ersten Referenzabschnitt (311) und der Tragrahmen (32) den zweiten Referenzabschnitt (333) umfassen.

4. Höhenverstellbares Möbel (1) nach einem der vorangehenden Ansprüche, bei dem die Kabelsicherung (8) einen Umlenkhebel (81) umfasst, der um eine Drehachse (82) kippbar mit dem ersten Referenzabschnitt (311) oder dem zweiten Referenzabschnitt (333) verbunden ist.

5. Höhenverstellbares Möbel (1) nach Anspruch 4, bei dem die Kabelsicherung (8) dazu ausgestaltet ist, dass ein Kippen des Umlenkhebels (81) um die Drehachse (82) eine Kraft auf denjenigen des ersten Referenzabschnitts (311) und des zweiten Referenzabschnitts (333), mit dem der Umlenkhebel (81) nicht drehbar verbunden ist, überträgt.

6. Höhenverstellbares Möbel (1) nach Anspruch 4 oder 5, bei dem das Kabel (6) am Umlenkhebel (81) der Kabelsicherung (8) montierbar ist.

7. Höhenverstellbares Möbel (1) nach Anspruch 6, bei dem der Umlenkhebel (81) mit einer Kabelbefestigungseinrichtung (812) ausgestattet ist.

8. Höhenverstellbares Möbel (1) nach einem der vorangehenden Ansprüche, bei dem die Stelleinrichtung (4) vordem Stoppen der Veränderung des Abstands zwischen dem Unterteil (2) und dem Oberteil (3) eine gegenläufige Veränderung des des Abstands zwischen dem Unterteil (2) und dem Oberteil (3) auslöst, wenn das vom Deformationssensor (7) übertragene Signal einer Änderung des ersten Referenzabschnitts (311) und des zweiten Referenzabschnitts (333) zueinander entspricht, die den vordefinierten Schwellenwert überschreitet.

9. Höhenverstellbares Möbel (1) nach einem der vorangehenden Ansprüche, bei dem die vom Deformationssensor (7) detektierbare Änderung des ersten Referenzabschnitts (311) und des zweiten Referenzabschnitts (333) zueinander eine relative Deformation zwischen dem ersten Referenzabschnitt (311) und dem zweiten Referenzabschnitt (333) umfasst.

10. Höhenverstellbares Möbel (1) nach einem der vorangehenden Ansprüche, bei dem die vom Deformationssensor (7) detektierbare Änderung des ersten Referenzabschnitts (311) und des zweiten Referenzabschnitts (333) zueinander eine Änderung des Abstands zwischen dem ersten Referenzabschnitt (311) und dem zweiten Referenzabschnitt (333) umfasst.

11. Höhenverstellbares Möbel (1) nach einem der vorangehende Ansprüche, bei dem die Kabelsicherung (8) so ausgestaltet ist, dass eine Zugkraft am Kabel (6) von maximal etwa 300 Newton, von maximal etwa 200 Newton oder von maximal etwa 100 Newton eine den Schwellenwert übersteigende Änderung des ersten Referenzabschnitts (311) und des zweiten Referenzabschnitts (333) zueinander bewirkt.

## Claims

1. Height-adjustable piece of furniture (1) comprising a lower part (2) which can be placed on a floor, an upper part (3), an adjustment arrangement (4), a first reference portion (311), a second reference portion (333) and a deformation sensor (7), wherein
a distance between the lower part (2) and the upper part (3) can be changed by means of the adjustment arrangement (4),
the deformation sensor (7) is arranged so as to detect a change in the first reference portion (311) and the second reference portion (333) with respect to one another,
the deformation sensor (7) is connected to the adjustment arrangement (4) such that a signal from the deformation sensor (7) can be transmitted to the adjustment arrangement (4), and
the adjustment arrangement (4) is designed to stop a change in the distance between the lower part (2) and the upper part (3) when the signal transmitted by the deformation sensor (7) represents a change in the first reference portion (311) and the second reference portion (333) with respect to one another that exceeds a predefined threshold value,
**characterized by**
a cable protector (8) on which a cable (6) for wiring an electrical device can be mounted, and which is coupled to the first reference portion (311) and the second reference portion (333) such that a tensile force acting on the cable (6) mounted on the cable protector (8) causes a change in the first reference portion (311) and the second reference portion (333) with respect to one other.

2. Height-adjustable piece of furniture (1) according to claim 1, wherein the deformation sensor (7) comprises a piezo element (71).

3. Height-adjustable piece of furniture (1) according to claim 1 or 2, wherein the upper part (3) has a support frame (32) and a tabletop (31) held by the support frame (32), wherein the cable protector (8) is mounted on the tabletop (31) or on the support frame (32) and the tabletop (31) comprises the first reference portion (311) and the support frame (32) comprises the second reference portion (333).

4. Height-adjustable piece of furniture (1) according to any of the preceding claims, wherein the cable protector (8) comprises a deflection lever (81) which is connected to the first reference portion (311) or the second reference portion (333) so as to be tiltable about a rotary axis (82).

5. Height-adjustable piece of furniture (1) according to claim 4, wherein the cable protector (8) is designed such that tilting of the deflection lever (81) about the rotary axis (82) transmits a force to whichever of the first reference portion (311) and the second reference portion (333) to which the deflection lever (81) is not rotatably connected.

6. Height-adjustable piece of furniture (1) according to claim 4 or 5, wherein the cable (6) can be mounted on the deflection lever (81) of the cable protector (8).

7. Height-adjustable piece of furniture (1) according to claim 6, wherein the deflection lever (81) is equipped with a cable fastening device (812).

8. Height-adjustable piece of furniture (1) according to any of the preceding claims, wherein the adjustment arrangement (4) triggers a reverse change in the distance between the lower part (2) and the upper part (3) before stopping the change in the distance between the lower part (2) and the upper part (3) when the signal transmitted by the deformation sensor (7) represents a change in the first reference portion (311) and the second reference portion (333) with respect to one another that exceeds the predefined threshold value.

9. Height-adjustable piece of furniture (1) according to any of the preceding claims, wherein the change in the first reference portion (311) and the second reference portion (333) with respect to one another detectable by the deformation sensor (7) comprises a relative deformation between the first reference portion (311) and the second reference portion (333).

10. Height-adjustable piece of furniture (1) according to any of the preceding claims, wherein the change in the first reference portion (311) and the second reference portion (333) with respect to one another detectable by the deformation sensor (7) comprises a change in the distance between the first reference portion (311) and the second reference portion (333).

11. Height-adjustable piece of furniture (1) according to any of the preceding claims, wherein the cable protector (8) is designed such that a tensile force on the cable (6) of at most approximately 300 newtons, at most approximately 200 newtons or at most approximately 100 newtons causes a change in the first reference portion (311) and the second reference portion (333) with respect to one another that exceeds the threshold value.

## Revendications

1. Meuble (1) réglable en hauteur, comportant une partie inférieure (2) pouvant être posée sur le sol, une partie supérieure (3), un dispositif de réglage (4), une première section de référence (311), une seconde section de référence (333) et un capteur de déformation (7), dans lequel
une distance entre la partie inférieure (2) et la partie supérieure (3) peut être modifiée à l'aide du dispositif de réglage (4),
le capteur de déformation (7) est disposé de manière à détecter une modification de la première section de référence (311) et de la seconde section de référence (333) l'une par rapport à l'autre,
le capteur de déformation (7) est connecté au dispositif de réglage (4) de telle sorte qu'un signal du capteur de déformation (7) peut être transmis au dispositif de réglage (4), et
le dispositif de réglage (4) est conçu pour arrêter une modification de la distance entre la partie inférieure (2) et la partie supérieure (3) lorsque le signal transmis par le capteur de déformation (7) correspond à une modification de la première section de référence (311) et de la seconde section de référence (333) l'une par rapport à l'autre, laquelle modification dépasse un seuil prédéfini,
**caractérisé par**
une glissière (8) sur laquelle un câble (6) peut être monté pour le câblage d'un appareil électrique et qui est accouplée à la première section de référence (311) et à la seconde section de référence (333) de telle sorte qu'une force de traction qui agit sur le câble (6) monté sur la glissière (8) entraîne une modification de la première section de référence (311) et de la seconde section de référence (333) l'une par rapport à l'autre.

2. Meuble (1) réglable en hauteur selon la revendication 1, dans lequel le capteur de déformation (7) comprend un élément piézoélectrique (71).

3. Meuble (1) réglable en hauteur selon la revendication 1 ou 2, dans lequel la partie supérieure (3) présente un cadre porteur (32) et un plateau de table (31) retenu par le cadre porteur (32), dans lequel la glissière (8) est montée sur le plateau de table (31) ou sur le cadre porteur (32), le plateau de table (31) comprend la première section de référence (311) et le cadre porteur (32) comprend la seconde section de référence (333).

4. Meuble (1) réglable en hauteur selon l'une des revendications précédentes, dans lequel la glissière (8) comprend un levier de renvoi (81) qui est relié, autour d'un axe de rotation (82), de manière inclinable à la première section de référence (311) ou à la seconde section de référence (333).

5. Meuble (1) réglable en hauteur selon la revendication 4, dans lequel la glissière (8) est réalisée de telle manière qu'un basculement du levier de renvoi (81) autour de l'axe de rotation (82) transmet une force à celle parmi la première section de référence (311) et la seconde section de référence (333), qui est reliée de manière non rotative au levier de renvoi (81).

6. Meuble (1) réglable en hauteur selon la revendication 4 ou 5, dans lequel le câble (6) peut être monté sur le levier de renvoi (81) de la glissière (8).

7. Meuble (1) réglable en hauteur selon la revendication 6, dans lequel le levier de renvoi (81) est muni d'un dispositif de fixation de câble (812).

8. Meuble (1) réglable en hauteur selon l'une des revendications précédentes, dans lequel, avant l'arrêt de la modification de la distance entre la partie inférieure (2) et la partie supérieure (3), le dispositif de réglage (4) déclenche une modification adverse de la distance entre la partie inférieure (2) et la partie supérieure (3) lorsque le signal transmis par le capteur de déformation (7) correspond à une modification de la première section de référence (311) et de la seconde section de référence (333) l'une par rapport à l'autre, laquelle modification dépasse le seuil prédéfini.

9. Meuble (1) réglable en hauteur selon l'une des revendications précédentes, dans lequel la modification de la première section de référence (311) et de la seconde section de référence (333) l'une par rapport à l'autre, pouvant être détectée par le capteur de déformation (7), comprend une déformation relative entre la première section de référence (311) et la seconde section de référence (333).

10. Meuble (1) réglable en hauteur selon l'une des revendications précédentes, dans lequel la modification de la première section de référence (311) et de la seconde section de référence (333) l'une par rapport à l'autre, pouvant être détectée par le capteur de déformation (7), comprend une modification de la distance entre la première section de référence (311) et la seconde section de référence (333).

11. Meuble (1) réglable en hauteur selon l'une des revendications précédentes, dans lequel la glissière (8) est réalisée de telle manière qu'une force de traction appliquée au câble (6), d'au plus environ 300 newtons, d'au plus environ 200 newtons ou d'au plus environ 100 newtons, entraîne une modification de la première section de référence (311) et de la seconde section de référence (333) l'une par rapport à l'autre, laquelle modification dépasse le seuil.
